# EUROPEAN PATENT SPECIFICATION

(11) **EP 2 908 986 B1**
(45) Date of publication and mention of the grant of the patent: **22.03.2017**
(21) Application number: 13786581.2
(22) Date of filing: 22.10.2013
(51) Int. Cl.: B25J 9/14

(54) **APPARATUS, SYSTEMS, AND METHODS FOR ACTUATING PRESSURIZABLE CHAMBERS**
VORRICHTUNG, SYSTEME UND VERFAHREN ZUM BETÄTIGEN VON DRUCKBEAUFSCHLAGBAREN KAMMERN
APPAREIL, SYSTÈMES ET PROCÉDÉS POUR ACTIONNER DES CHAMBRES POUVANT ÊTRE MISES SOUS PRESSION

(30) Priority: 22.10.2012 US 201261716765 P
(43) Date of publication of application: 26.08.2015
(73) Proprietor: President and Fellows of Harvard College, Cambridge, MA 02138 (US)
(72) Inventor: MOSADEGH, Bobak, Boston, MA 02111 (US); WHITESIDES, George, M., Newton, MA 02458 (US)
(74) Representative: HGF Limited
(86) International application number: PCT/US2013/066164
(87) International publication number: WO 2014/066378

(56) References cited:
- EP-A1- 1 190 819
- US-A1- 2007 199 399

## Description

### Cross-Reference To Related Applications

This application claims benefit of the earlier filing date of U.S. Provisional Patent Application No.: 61/716,765, entitled "SYSTEMS AND METHODS FOR ACTUATING SOFT ROBOTS," filed on October 22, 2012, by Mosadegh et al.. All patents, patent applications and publications cited herein are hereby incorporated by reference in their entireties in order to more fully describe the state of the art as known to those skilled therein as of the date of the invention described herein.

### Statement Regarding Federally Sponsored Research Or Development

The present invention was made with United States government support under Grant No. W911NF-11-1-0094 awarded by the Defense Advanced Research Projects Agency. The United States government has certain rights in this invention.

### Background

Organisms, such as Echinoderms (starfish, sea urchins) and Cnidarians (jellyfish) are ancient and incredibly successful, relatively simple organisms capable of movement unheard of in even the most advanced hard-robotic systems. One major reason for the gap between nature and the state of the art robotic systems is the severe limitation in material selection available for robotics. To bridge this gap between natural and the state of the art robotic systems, robotic systems have exploited different materials. For example, a soft robotic system can use soft materials, such as soft elastomer, or flexible materials, such as papers and a nitrile, to build its structures, as disclosed in U.S. Provisional Application No. 61/598,691, titled "Soft robotic actuators" by Shepherd et al., and U.S. Provisional Application No. 61/588,596, titled "Flexible robotic actuators" by Mazzeo et al., which are hereby incorporated by reference in their entireties.

A soft robotic system can provide motions when different parts of the soft robotic system are appropriately pressurized using pressurized gas. Oftentimes, the soft robotic system can provide complex motions when different parts of the soft robotic system are pressurized independently. Unfortunately, existing mechanisms for providing pressurized gas are bulky, slow, and inaccurate for many soft robotic system applications, and existing EP1190819 discloses a pair of flexible actuators (4) supported by a fixture (2) made of a hard rubber at base ends of the flexible actuators (4). Each flexible actuator (4) includes a movable unit (6) capable of bending, a pump unit (8) integrally connected to the movable unit (6) at an end thereof, for controlling transfer of work fluid sealed in the movable unit, and a pump driver (10) for controlling driving of the pump unit (8). The movable unit (6) includes two long and narrow tubes (12) and (14) each having an accordion wall, a core (16) maintaining the tubes in parallel to each other, and a thin-film-bag-like cover (18) covering the tubes (12) and (14). The tube (12), which comes into contact with a subject (B), is made of a soft material. The movable unit (6) provided with the tube (12) softly comes into contact with the subject at a plurality of plane-contact portions of action of the movable unit (6), thereby holding the subject without scratching the same.

### Summary

A control system for flexible robotic actuators are described. These and other aspects and embodiments of the disclosure are illustrated and described below.

Some embodiments include a pneumatic controller for controllably providing a pressurized fluid to a target location. The pneumatic controller can include an elastomeric manifold comprising a body and a membrane coupled to a portion of the body, wherein a first volume between the body and the membrane forms at least a first integrated channel having a first inlet, a first outlet, and a first exhaust, wherein the first integrated channel is configured to receive a pressurized fluid at a first pressure at the first inlet and provide the pressurized fluid to the first outlet. The pneumatic controller can also include a valve unit comprising a first actuator and a second actuator, wherein the first actuator is configured to deflect a first portion of the membrane to control a fluidic flow between the first inlet and the first outlet of the first integrated channel, and wherein the second actuator is configured to deflect a second portion of the membrane to control a fluidic flow between the first outlet and the first exhaust in the first integrated channel.

In any of the embodiments described herein, at least one of the first actuator and the second actuator comprises a piezoelectric actuator.

In any of the embodiments described herein, at least one of the first actuator and the second actuator comprises one or more of: shape-memory alloys, dielectric elastomers, and a pneumatic/hydraulic pressure actuator.

In any of the embodiments described herein, the body comprises a first material and the membrane comprises a second material, and wherein the second material is at least as elastic as the first material.

In any of the embodiments described herein, a second volume between the body and the membrane form a second integrated channel having a second inlet, a second outlet, and a second exhaust, and wherein the pneumatic controller further comprises a second valve unit configured to deflect a third portion of the membrane to control a fluidic flow between the second inlet, the second outlet, and the second exhaust.

In any of the embodiments described herein, the first outlet is coupled to a pressurizable chamber.

In any of the embodiments described herein, the pressurizable chamber is a component of a soft robotic system.

In any of the embodiments described herein, the first pressure of the pressurized fluid is at least 5 psi.

In any of the embodiments described herein, a height of the first integrated channel is at least 100 µm.

In any of the embodiments described herein, the second material comprises a mixture of a soft silicone material and Polydimethylsiloxane (PDMS.)

In any of the embodiments described herein, the membrane comprises a material having a maximum tolerable strain greater than 150%.

Some embodiments include a flow controller for controllably providing a pressurized fluid. The flow controller can include a first elastomeric manifold comprising a first input, a first outlet, and a first integrated channel, wherein the first input is coupled to the first integrated channel and is configured to receive pressurized fluid from a first pneumatic source; a second elastomeric manifold comprising a second input, a second outlet, and a second integrated channel, wherein the second input is coupled to the second integrated channel and is configured to receive pressurized fluid from a second pneumatic source; a flexible elastomeric membrane disposed between the first elastomeric manifold and the second elastomeric manifold, wherein the elastomeric membrane separates the first outlet of the first elastomeric manifold and the second integrated channel of the second elastomeric manifold; and an actuator configured to deflect a wall of the first integrated channel to block the first integrated channel, wherein when the wall of the first integrated channel is not deflected, the first integrated channel is configured to provide the pressurized fluid from the first pressure source to the flexible elastomeric membrane, thereby deflecting the flexible elastomeric membrane to block the second input and the second outlet in the second integrated channel.

In any of the embodiments described herein, the second outlet is coupled to a pressurizable chamber.

In any of the embodiments described herein, the first pressure is at least 5 psi greater than the second pressure.

In any of the embodiments described herein, a displacement of the actuator upon actuation is less than a thickness of the second integrated channel.

In any of the embodiments described herein, the first elastomeric manifold comprises a first plurality of integrated channels, wherein each of the first plurality of integrated channels is coupled to the first inlet and comprises an independent outlet, wherein the second elastomeric manifold comprises a second plurality of integrated channels, each of the second plurality of integrated channels is coupled to the second outlet and comprises an independent inlet coupled to an independent pressure source, and the flow controller further comprises a plurality of actuators configured to block a fluidic flow of only one of the first plurality of integrated channels in the first elastomeric manifold, thereby blocking a fluidic flow of all but one of the second plurality of integrated channels in the second elastomeric manifold.

In any of the embodiments described herein, the flexible elastomeric membrane comprises a material having a maximum tolerable strain greater than 150%.

Some embodiments include a method of actuating a pressurizable chamber. The method includes receiving a pressurized fluid from the inlet in the integrated channel of the elastomeric manifold of the pneumatic controller in accordance with disclosed embodiments; moving the second actuator of the pneumatic controller from a first position to a second position to deflect a first portion of the first membrane, thereby blocking a fluidic flow between the outlet and the exhaust of the first integrated channel and to route the pressurized fluid through the first outlet to the pressurizable chamber coupled to the first outlet; and once a pressure in the pressurizable chamber reaches a predetermined level, moving the first actuator from a third position to a fourth position to deflect a second portion of the first membrane, thereby blocking a fluidic flow between the inlet and the outlet of the first integrated channel and to maintain the pressure in the pressurizable chamber.

In any of the embodiments described herein, the method includes moving the second actuator from the second position to the first position to allow a fluidic flow from the pressurizable chamber to the exhaust.

In any of the embodiments described herein, receiving the pressurized fluid from the pressure source comprises receiving pressurized fluid having pressure of at least 5 psi from the pressure source.

In any of the embodiments described herein, the method includes receiving, from a computational device at the pneumatic controller, an instruction to move one or more of the first actuator and the second actuator.

In any of the embodiments described herein, receiving the instruction comprises receiving the instruction over a wireless communication system.

Some embodiments include a method of actuating a pressurizable chamber. The method includes receiving, at the first integrated channel in the first manifold of the flow controller in accordance with some embodiments, a pressurized fluid from a first pressure source; receiving, at the second integrated channel in the second manifold of the flow controller, a pressurized fluid from a second pressure source; coupling the second outlet of the second integrated channel to the pressurizable chamber; and moving the actuator of the flow controller from a first position to a second position to deflect wall of the first integrated channel to block a fluidic flow in the first integrated channel, thereby providing the pressurized fluid from the second pressure source to the pressurizable chamber.

In any of the embodiments described herein, the method also includes moving the actuator of the flow controller from the second position to the first position to provide the pressurized fluid, from the first pressure source, to the flexible elastomeric membrane, thereby causing the flexible elastomeric membrane to block a fluidic flow in the second integrated channel.

In any of the embodiments described herein, a pressure of the pressurized fluid from the first pressure source is at least 5 psi greater than a pressure of the pressurized fluid from the second pressure source.

In any of the embodiments described herein, a height of the second integrated channel is at least 100 µm.

In any of the embodiments described herein, the method also includes coupling the second outlet to an exhaust to release pressurized fluid in the pressurizable chamber.

### Brief Description Of The Drawings

The invention is described with reference to the following figures, which are presented for the purpose of illustration only and are not intended to be limiting.
FIG. 1 illustrates a motion of a soft robotic actuator in response to pressurization, in accordance with certain embodiments.
FIGS. 2A-2C illustrate a pneumatic controller in accordance with certain embodiments.
FIGS. 3A-3D illustrate a cross-sectional view of a pneumatic controller in different configurations in accordance with certain embodiments.
FIG. 4 illustrates a top-down illustration of a pneumatic controller in accordance with certain embodiments.
FIG. 5 shows a top-down view of a physically-built pneumatic controller in accordance with certain embodiments.
FIGS. 6A-6C illustrate characteristics of a pneumatic controller in accordance with certain embodiments.
FIGS. 7A-7C demonstrate individually controlling valve units in a pneumatic controller in accordance with certain embodiments.
FIG. 8 is (A) an exploded view and (B) an enlarged view of a single element in a multi-stage elastomeric manifold having a master/slave manifold in accordance with certain embodiments.
FIGS. 9A-9B is a cross-sectional view illustrating an operation of the multi-stage elastomeric manifold in accordance with certain embodiments.
FIGS. 10A-10B illustrate characteristics of a master/slave manifold in accordance with certain embodiments.
FIGS. 11A-11B show pressure profile for controlling a soft tentacle using various actuation sequences in accordance with certain embodiments.

### Detailed Description

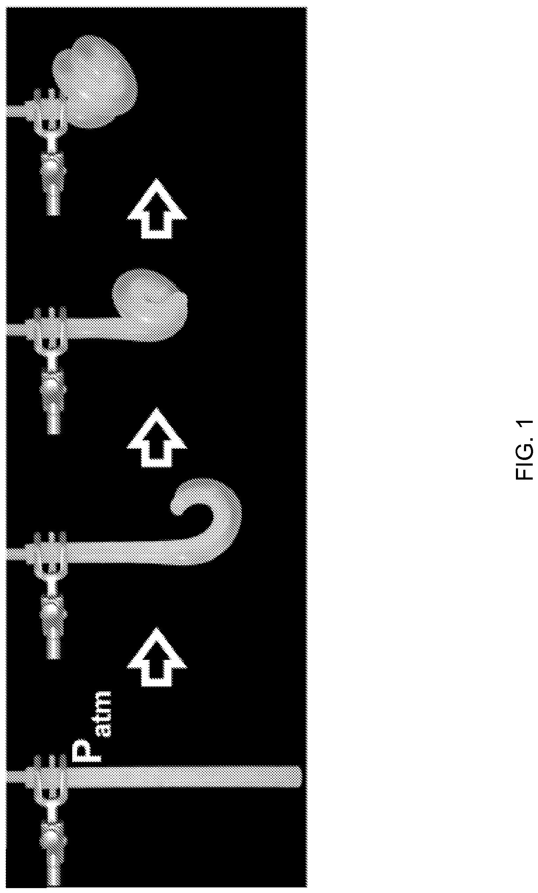

Pneumatic or hydraulic actuator systems can include channels that can be pressurized to provide motion. FIG. 1 illustrates a motion of a pneumatic actuator system, for example a soft robot, in response to pneumatic pressurization. As the pneumatic actuator system is subjected to increasing pressure (as denoted by the arrows moving from left to right in FIG. 1), the soft robot takes on different and more complex shapes. In some cases, a soft robot can provide complex motions when the soft robot's actuators are independently pressurized. Typically, a soft robot is pressurized using a pneumatic system including a pressure source and a bank of large solenoid-based valves. The solenoid-based valves can be configured to distribute the pressurized gas from the pressure source to different parts of the soft robot. Unfortunately, solenoid-based valves tend to be complex, slow, bulky, expensive, and difficult to reconfigure, and they tend to consume a large amount of electrical power. Furthermore, solenoid-based valves do not scale well to accommodate a large number of independent pressurization chambers in soft robots.

The disclosed apparatus, systems, and methods address these issues associated with existing pressurization mechanisms. The disclosed apparatus, systems, and methods provide a pneumatic controller that can provide pressurized gas to a large number of pneumatic or hydraulic actuated systems, such as soft robot actuators. In some cases, the pneumatic controller can be coupled to a single pressure source and provide pressurized gas from the single pressure source to multiple soft robot actuators. In other cases, the pneumatic controller can be coupled to a plurality of pressure sources and provide pressurized gas from one of the multiple pressure sources to soft robot actuators. Such versatility of the pneumatic controller can promote the design of complex pneumatic networks, which, in turn, can promote the development of sophisticated pneumatic or hydraulic actuated systems. In addition, the compactness and portability of the disclosed pneumatic controller can enable new soft robotic applications in demanding environments, such as surgical rooms and search and rescue.

The disclosed pneumatic controller includes a physical actuator and an elastomeric device. The elastomeric device can include integrated channels for guiding gas flows. The physical actuator can be actuated to one of a plurality of states including the first state and the second state. The physical actuator can be disposed with respect to the elastomeric device so that, in the first state, the physical actuator can physically press an outer wall of the elastomeric device to close one of the integrated channels in the elastomeric device, thereby stopping the gas flow through the one of the integrated channels. On the other hand, in the second state, the physical actuator can release the one of the integrated channels in the elastomeric device, thereby allowing the gas flow through the one of the integrated channels. In some embodiments, the elastomeric device can be disposed above the physical actuator, in which case the physical actuator can move vertically to control the gas flow through the integrated channels. In other embodiments, the elastomeric device can be arbitrarily disposed with respect to the physical actuator so that the physical actuator can control the gas flow through the integrated channels of the elastomeric device.

In some embodiments, the physical actuator can include a piezoelectric actuator. In some cases, the piezoelectric actuator can include a pin, such as those used in a Braille display device. For example, the pin can be configured to reversibly block one of the integrated channels to control the pneumatic flow in the integrated channels. This channel flow control mechanism can provide highly versatile pneumatic control for pneumatic or hydraulic actuated systems. In other embodiments, the physical actuator can be any type of actuator that can provide a movement and provide enough force to deflect a layer of an elastomeric material. For example, the physical actuator can be based on shape-memory alloys, dielectric elastomers, or a pneumatic/hydraulic pressure based actuator.

Braille display devices have been used in microfluidics applications. However, fluid controllers in microfluidics applications are often designed for transporting fluids at approximately the atmospheric pressure. Fluid channels in fluid controllers are often thin: the channel height in fluid controllers is around 30 µm, which can be satisfactory for slow, low-pressure fluidic flow, but unsatisfactory for fast, high-pressure pneumatic flows. Also, the fluidic control architecture is not amenable for controlling fluid flow through large channels because piezoelectric actuators in Braille displays have limited displacement.

In contrast, the disclosed pneumatic controller is designed to transport gas at a high pressure and at a high flow rate. These characteristics can enable rapid pressurization or depressurization of soft robot actuators. In some embodiments, the pneumatic controller can include integrated channels tailored to address high pressure and high flow rate. For example, the integrated channels in the pneumatic controller can have a large cross-sectional area and can be integrated between a body and a soft, elastic membrane. The large cross-sectional area allows for a rapid pneumatic flow at a high flow rate. Also, the soft membrane can enable an effective valving of the integrated channel even at a high pressure. In some embodiments, the pneumatic controller can have a two-stage architecture for controlling pneumatic flow in channels with a large cross-sectional area.

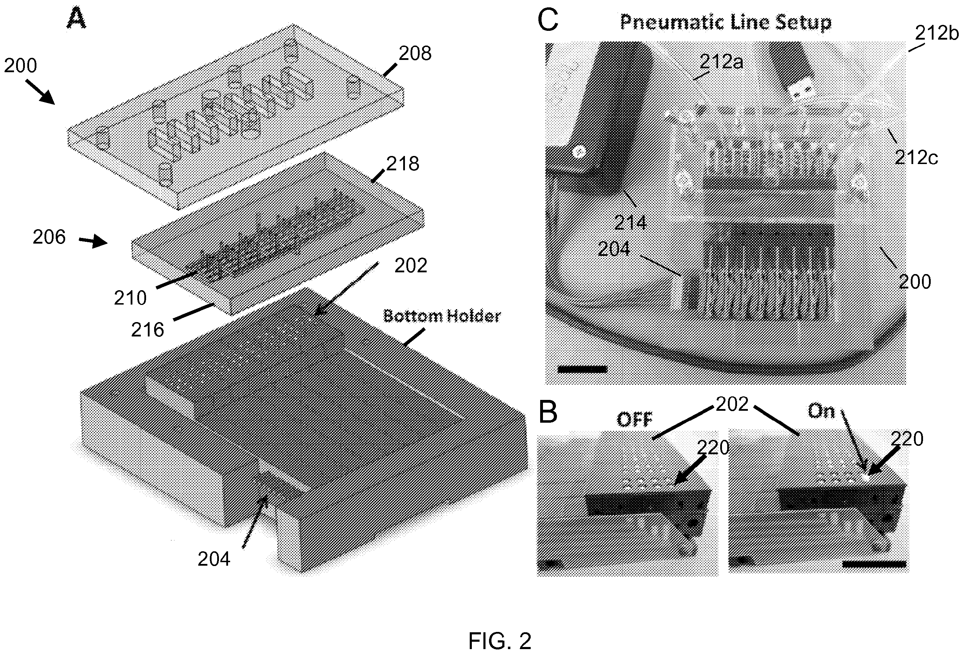

FIGS. 2A-2C illustrate a pneumatic controller in accordance with certain embodiments. As illustrated in FIG. 2A, the pneumatic controller 200 can include an array of piezoelectric actuators 202, electrical connections 204 to the array of piezoelectric actuator 202, an elastomeric manifold 206 coupled to the array of piezoelectric actuator 202, and a top plate 208. The elastomeric manifold 206 can include a body 218 and a membrane 216 coupled to the bottom of the body 218. The body 218 can include grooves, and the grooves between the body 218 and the membrane 216 form integrated channels 210 that can accommodate gas flow. In some embodiments, the grooves can be formed in the elastomeric manifold 206 using soft lithography.

In some embodiments, the array of piezoelectric actuators 202 can include an electronic Braille display device. Conventionally, an electronic Braille device provides dynamic tactile information to vision-impaired individuals. However, in the pneumatic controller 200, the Braille display device can operate as an array of piezoelectric actuators. The movement of an actuated pin in the electronic Braille device can be used to control the gas flow in the integrated gas channels 210. FIG. 2B illustrates an operation of an electronic Braille display device 202 in accordance with certain embodiments. When a piezoelectric actuator 220 is "off" as shown on the left figure, the actuator 220 or the pin sits within a cavity of the Braille display device 202. However, when the piezoelectric actuator 220 is "on" as shown on the right figure, the actuator 220 or the pin is raised out of the cavity and above the surface of the Braille display device 202, thereby forming a "bump" or raised feature on the surface of the Braille device 202.

FIG. 2C is a photograph of the assembled pneumatic controller including an elastomeric manifold coupled with an actuator array in accordance with certain embodiments. The pneumatic controller 200 is coupled to a pressure source and one or more pneumatically or hydraulically actuated systems, such as soft robots, via pneumatic lines 212a-212c. The pneumatic controller 200 is also coupled to a control system 214 via the electrical connections 204. The control system 214 can control the pneumatic controller 200 to couple one of the pressure sources to one of the pneumatic or hydraulic actuated systems via pneumatic lines 212a-212c. In some embodiments, the connections 204 can be wireless. For example, the connections 204 can include a Bluetooth transceiver to receive instructions from the control system 214 via Bluetooth. The connections 204 can also include a Wi-Fi transceiver, ZigBee transceiver, an Ultra-wideband transceiver, a wireless universal serial bus (USB) transceiver, a near field communication transceiver, or any other types of wireless transceivers or any combinations thereof.

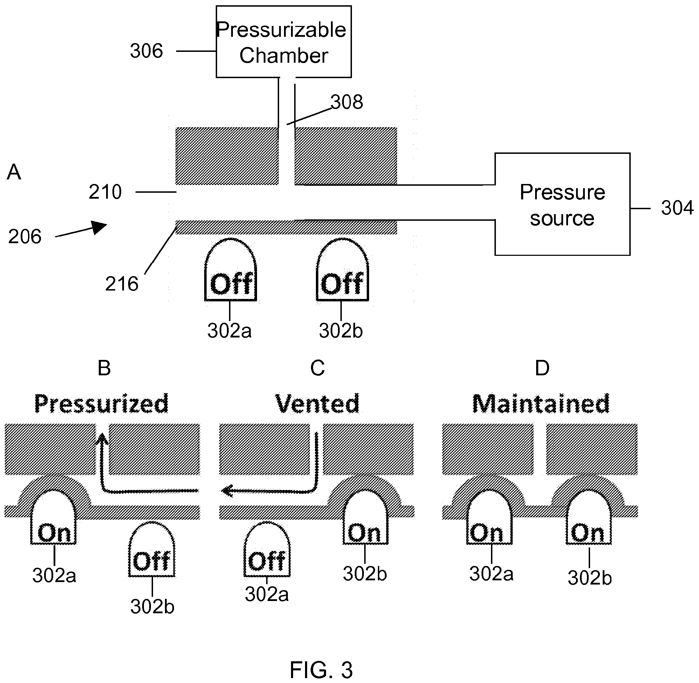

FIGS. 3A-3D illustrate a cross-sectional view of a pneumatic controller in different configurations in accordance with certain embodiments. The pneumatic controller can include an elastomeric manifold 206 having an elastomeric membrane 216, an integrated channel 210, actuators 302a-302b, and an outlet 308 to a pressurizable chamber 306, which can be a pneumatically or hydraulically actuated soft robot. The portion of the pneumatic controller illustrated in FIGS. 3A-3D includes two piezoelectric actuators and an outlet. These piezoelectric actuators and an outlet form a valve unit, which provides a physical mechanism for coupling a soft robot actuator to a pressure source or to an exhaust. FIG. 3A illustrates a cross-sectional view of a valve unit when piezoelectric actuators 302a-302b are "off." Because the piezoelectric actuators 302a-302b do not block the integrated channel 210, pressurized gas from the pressure source 304 can be directed through the integrated channel rather than to the soft robot pressurizable chamber 306. In this case, the pressure source 304 does pressurize the soft robot pressurizable chamber 306.

By controlling the positions of actuators 302a-302b, a pressurized fluid from pressure source 304 can be directed through the various components of the pneumatic control system. FIG. 3B illustrates a cross-sectional view of a valve unit when the piezoelectric actuator 302b, closer to the pressure source 304, is off and the piezoelectric actuator 302a, further away from the pressure source 304, is on. This configuration of the valve unit is called the "pressurized" configuration. When the piezoelectric actuator 302a is on, the piezoelectric actuator 302a is raised against the elastomeric membrane 216 of the elastomeric manifold 206, thereby closing the integrated channel 210 at a location above the piezoelectric actuator 302a. In this configuration, when the pressure source 304 provides pressurized gas, the pressurized gas is directed to the pressurizable chamber 306.

When the pressurized gas is directed to the soft robot actuator 306 for a prolonged period of time, the pressure in the soft robot pressurizable chamber 306 can reach and stabilize at the pressure of the pressurized gas from the pressure source 304. For example, if the pressure of the pressurized gas from the pressure source 304 is 10 psi and if the valve unit is configured as illustrated in FIG. 3B for a prolonged period of time, the pressure in the soft robot actuator 306 reach and stabilize at 10 psi. The time it takes to stabilize the pressure of the soft robot pressurizable chamber 306 can depend on the size of the pneumatic chamber in the soft robot pressurizable chamber 306 and the flow rate of the pressurized gas through the integrated channel 210. For example, if the pneumatic chamber is large and/or if the flow rate of the pressurized gas is low, then it would take longer time to stabilize the pressure of the soft robot actuator 306. Additionally, the amount of time needed for stabilization can depend on the compliance of the material forming the soft robot actuator. For example, soft robots formed using less elastic materials tend to stabilize faster compared to soft robots formed using softer materials. Also, the amount of time needed for stabilization can depend on the amount of volumetric change of the soft robot actuator. For example, actuators that undergo less volumetric change will stabilize faster compared to actuators that undergo more volumetric change.

FIG. 3C illustrates a cross-sectional view of a valve unit when the piezoelectric actuator 302a, further from the pressure source 304, is off and the piezoelectric actuator 302b, closer to the pressure source 304, is on. This configuration is called the "depressurized" configuration. When the piezoelectric actuator 302b is on, the piezoelectric actuator 302b is raised against the elastomeric membrane 216 of the elastomeric manifold 206, thereby closing the integrated channel 210 above the piezoelectric actuator 302b. In this configuration, the pressure source 304 is blocked from providing pressurized gas to the soft robot actuator 306. Instead, the piezoelectric actuators are configured so that any pressurized gas in the soft robot actuator 306 would be released through the exhaust (located in communication with the integrated channel 210). When the soft robot actuator 306 is coupled to the exhaust for a prolonged period of time, the pressure in the soft robot actuator 306 can reach the pneumatic pressure of the apparatus coupled to the exhaust. For example, if the exhaust is coupled to an atmospheric pressure, and if the valve unit is configured as in FIG. 3C for a prolonged period of time, then all the pressurized gas in the soft robot pressurizable chamber 306 would be released through the exhaust, and the pressure in the soft robot pressurizable chamber 306 would reach zero psi.

FIG. 3D illustrates a cross-sectional view of a valve unit when both piezoelectric actuators 302a-302b are on. This configuration is called the "hold" configuration because this configuration would "hold" the pressurized gas in the soft robot actuator 306. When the piezoelectric actuators 302a-302b are on, the piezoelectric actuators 302a-302b are raised against the elastomeric membrane 216 of the elastomeric manifold 206, thereby closing the integrated channel 210 above the piezoelectric actuators 302a-302b. This configuration blocks the soft robot actuator 306 from the pressure source 304 or the exhaust. Therefore, in this configuration, the soft robot pressurizable chamber 306 is configured to maintain its pressurized state: if the soft robot pressurizable chamber 306 is pressurized to a certain pressure, the soft robot pressurizable chamber 306 would maintain that pressure.

In some embodiments, a pneumatic controller 200 can provide a wide range of pressures to the soft robot actuator 306. For example, the pneumatic controller 200 can be configured to provide -1 psi to 60 psi of pressurized gas. Thus, the pneumatic controller 200 can be configured to provide both positive pressure as well as negative pressure. In some embodiments, a pneumatic controller 200 can provide, to a soft robot actuator coupled to the outlet, pressure less than the gas pressure from the pressure source 304. For example, when the gas pressure from the pressure source 304 is 10 psi, the pneumatic controller can manipulate the piezoelectric actuators so that a soft robot actuator receives 5 psi of pressure.

A pneumatic controller 200 can provide pressure less than the gas pressure from the pressure source 304 using one of at least two mechanisms. The first mechanism is based on an observation that pressure in a soft robot actuator 306 can increase proportionally to a time period for pressurization. Therefore, by varying the time period during which the soft robot actuator 306 is pressurized, the pneumatic controller 200 can control the resulting pressure in the soft robot pressurizable chamber 306. In this first mechanism, the pneumatic controller 200 can first pressurize the soft robot pressurizable chamber 306 using the "pressurize" configuration of FIG. 3B. Then, before the pressure in the soft robot pressurizable chamber 306 stabilizes at the pressure of the pressure source 304, the pneumatic controller 200 can decouple the pressure source 304 from the soft robot actuator 306 using the "hold" configuration of FIG. 3D. Because the pressure source 304 is decoupled while pressurizing the soft robot pressurizable chamber 306, the pressure in the soft robot pressurizable chamber 306 would be less than the pressure of the pressure source 304.

In some cases, the pressure in the soft robot pressurizable chamber 306 can increase approximately linearly to the amount of time during which the pressurized gas is provided to the soft robot pressurizable chamber 306. Therefore, if it takes 1 second to pressurize the soft robot pressurizable chamber 306 to 10 psi, the pneumatic controller 200 can pressurize the soft robot pressurizable chamber 306 to 5 psi by pressurizing the soft robot pressurizable chamber 306 for 0.55 second.

The second mechanism is based on an observation that pressure in a soft robot pressurizable chamber 306 can decrease proportionally to a time period during which the soft robot actuator 306 is depressurized, e.g., coupled to an exhaust. Therefore, by varying the time period during which the soft robot pressurizable chamber 306 is depressurized, the pneumatic controller 200 can control the resulting pressure in the soft robot pressurizable chamber 306. In this second mechanism, the pneumatic controller 200 can first pressurize the soft robot pressurizable chamber 306 to a pressurized state using the "pressurize" configuration of FIG. 3B. Then, the pneumatic controller can decouple the soft robot pressurizable chamber 306 from the pressure source 304, and couple the soft robot pressurizable chamber 306 to the exhaust, using the "depressurize" configuration of FIG. 3C. Before the pressure in the soft robot pressurizable chamber 306 stabilizes at the pressure of the exhaust, the pneumatic controller 200 can decouple the exhaust from the soft robot pressurizable chamber 306 using the "hold" configuration of FIG. 3D. This control sequence can provide the soft robot pressurizable chamber 306 with pressure that is intermediate to the pressure of the pressure source 304 and the pressure of the exhaust.

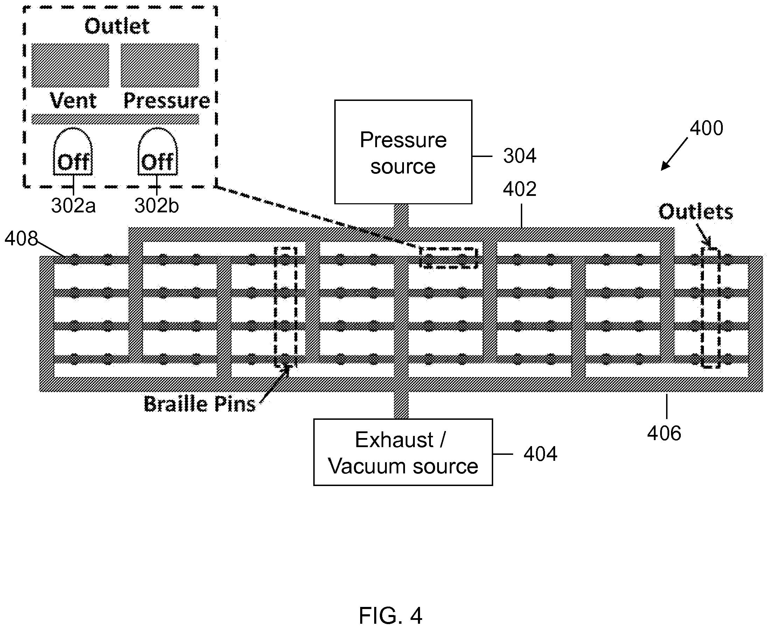

FIG. 4 is a top-down illustration of a pneumatic controller in accordance with certain embodiments. The pneumatic controller 400 can be coupled to a pressure source 304 via a pressure channel 402, and to an exhaust or a vacuum source 404 via an exhaust channel 406. The pressure channel 402 and the exhaust channel 406 can be coupled via coupling channels 408. The pneumatic controller 400 can include a plurality of valve units that control the pneumatic flow in coupling channels 408. Depending on the configuration of the valve unit, the pneumatic controller can (1) provide pressurized gas to a soft robot pressurizable chamber coupled to the outlet, (2) release pressurized gas from a soft robot pressurizable chamber coupled to the outlet, or (3) maintain pressurized gas in a soft robot pressurizable chamber coupled to the outlet. The piezoelectric actuators are illustrated using large dots and the outlets are illustrated using small dots. A cross section of a valve unit is shown in the blow-up.

In some embodiments, the pressure channel 402 and the exhaust channel 406 in the pneumatic controller 400 can be fingered and inter-digitated with one another, as when fingers of one hand are laced between those of the other. The fingered and inter-digitated channels are illustrated in FIG. 4. In other embodiments, the pressure channel 402 and the exhaust channel 406 can be configured as two parallel channels.

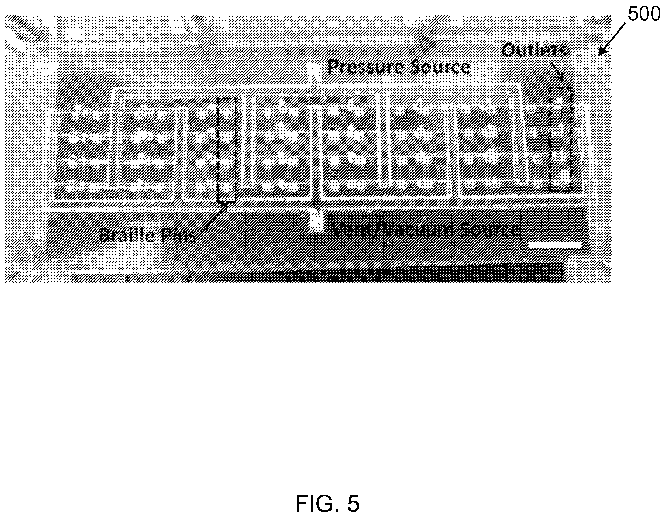

FIG. 5 shows a top-down image of a pneumatic controller in accordance with certain embodiments. This pneumatic controller 500 is compact (3" × 3.5"), and light-weight (264 g).

The pneumatic controller 500 includes a Braille display device having 64 individually addressable piezoelectric actuators. The piezoelectric actuators have a diameter of 1.3 mm and a dot spacing of 2.4 mm. This Braille display device can be purchased from KGS America LLC. Each piezoelectric actuator can be actuated with a force of 0.18 N, and can have a vertical displacement of 700µm. The 64 individually addressable piezoelectric actuators can form 32 valve units, providing independent connections to 32 soft robotic actuators.

In some embodiments, the integrated channels 210 in the elastomeric manifold 206 can be formed via molding. The molds for the integrated channels can be fabricated using one or more of several techniques, including photolithography, using light-patterned epoxy, direct embossing into a thermoplastic 3D printing or stereolithography, laser-cutting into plastic, cutter-plotting, etching, and ink-based lithography.

In some embodiments, the membrane 216 of the elastomeric manifold 206 can include a material with a high maximum tolerable strain, for example, greater than 150%. For example, the membrane 216 can include a mixture of a soft silicone material, such as Ecoflex, and polydimethylsiloxane (PDMS.) This enables the elastomeric membrane 216 to stretch to a greater extent, but also restore back quickly. The elastomeric membrane can thus provide additional strain for larger valves. This is in contrast to elastomeric manifolds for microfluidic applications because in microfluidic applications, the elastomeric manifold, including the membrane of the manifold, only uses PDMS, which has limited strain, precluding its use for large valves.

As used herein, stiffness refers to a resistance of an elastic body to deformation (e.g., extension) by an applied force. In general, elastic modulus is related to, but not the same as, stiffness. Elastic modulus is a property of the constituent material; stiffness is a property of a structure. That is, the elastic modulus is an intensive property of the material; stiffness, on the other hand, is an extensive property of the network and is dependent on the material modulus and the shape and boundary conditions. Because stiffness is a function of the Young's modulus, the material modulus can be used as a comparative measure of the relative stiffness of the channels walls and a predictor of deflection upon pressurization of the channel networks.

As used herein, strain refers to a relative change in length with respect to the original length of a material. In particular, strain refers to the relative change in length divided by the original length of the material. A material can be associated a maximum tolerable strain, which refers to a maximum amount of strain that the material can undergo before the material can return to its original state after release of the applied stress. Generally, a material having a higher stiffness requires more stress (or more force) to achieve the same level of strain compared to a material having a lower stiffness.

The mixture ratio of the soft silicone material to PDMS in the elastomeric membrane 216 can depend on the desired elastomeric properties and the desired valve dimensions. In some embodiment, the ratio of the soft silicone material to PDMS can be about two-parts of the soft silicone material to one-part PDMS (2:1). The composition of the elastomeric membrane 216 can be determined by testing a set of mixtures with different ratios of the soft silicone material to PDMS and selecting the mixture that was able to expand enough to close the integrated channel but could also be bonded to the rest of the elastomeric manifold 206 using plasma oxidation.

In some embodiments, the membrane 216 of the elastomeric manifold 206 can be formed using any other types of elastomeric material having a high maximum tolerable strain (>150%) that can be strained and can be subsequently self-restored upon a release of the piezoelectric actuator.

In some embodiments, the body 218 of the elastomeric manifold 206 can be formed using any material that can maintain integrated channels and can sustain pressure in the integrated channels. In some embodiments, the material used for the membrane 216 can be more elastic compared to the material used for the body 218. This allows the membrane 216 to effectively close the integrated channels even at high pressures. In some embodiments, the body 218 can be formed using a mixture of the PDMS and the soft silicone material mixed at an about 1:2 mixing ratio.

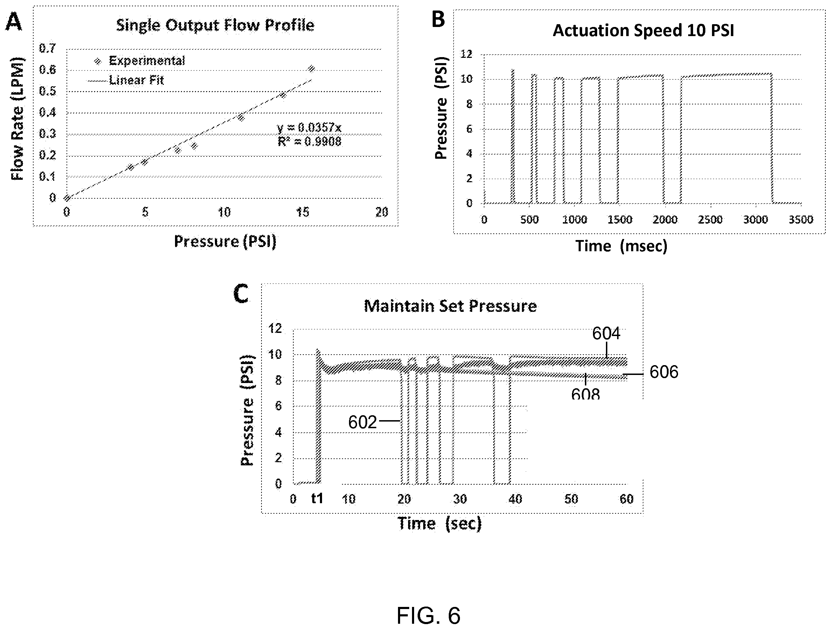

FIGS. 6A-6C illustrate characteristics of a pneumatic controller in accordance with certain embodiments. To characterize the performance of the pneumatic controller, a range of flow rates, response time, and maintenance of a given pressure has been tested. FIG. 6A shows the relationship between a pneumatic pressure applied by a pressure source and a pneumatic flow rate through the integrated channels in the elastomeric manifold. The slope of the fitted linear regression line can represent an inverse of the integrated channels' resistance. In some embodiments, the integrated channels' resistance is 28.0 psi / liter per minute (LPM.)

FIG. 6B illustrates the pressure measured at an outlet of the pneumatic controller 500 when the outlet is sequentially coupled to and decoupled from a pressure source. FIG. 6B illustrates that the full pressurization can occur with a response time of about 10 milliseconds. FIG. 6B also shows that the pneumatic controller 500 can repeatedly provide a predetermined pressure for a predetermined period of time. For example, in FIG. 6B, the pneumatic controller 500 provides 10 psi of pressure to the outlet for 10ms, 50ms, 100ms, 200ms, 500ms, and 1000ms, respectively.

FIG. 6C illustrates that the pneumatic controller 500 can maintain pressurized gas in soft robotic pressurizable chamber for a prolonged period of time. For example, a pneumatic controller 500 is coupled to a pressure source and three outlets, and the valve units are controlled to maintain pressurized gas at the outlets. The line 602 illustrates the pressure provided by the pressure source, and the lines 604-608 illustrate the pressure at the three outlets, respectively.

At t₁, the valve units enter the "pressurized" configuration, at which the valve units provide pressurized gas to the outlets. Once the pressure at the outlets reaches a steady state, the valve units can switch to the "hold" configuration. Once the valve units enter the "hold" configuration, even if the input pressure 602 varies as a function of time, the pressure at the three outlets 604-608 can be maintained roughly at the initial steady state pressure.

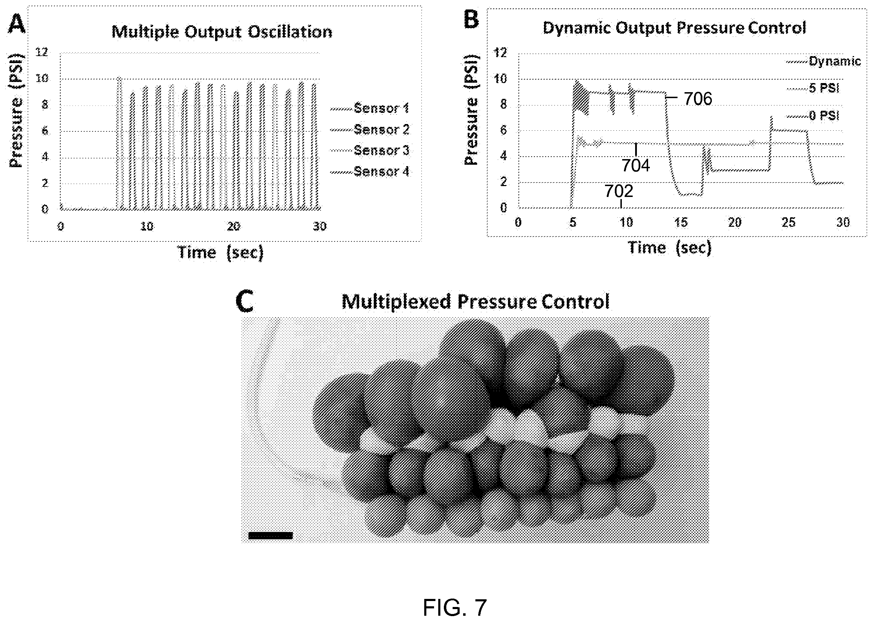

In some embodiments, the valve units can be individually addressed and controlled. In some cases, the valve units can be individually, or selectively, addressed and controlled using an electronic system. FIGS. 7A-7C demonstrate individually controlling valve units in the pneumatic controller 500 in accordance with certain embodiments. FIG. 7A illustrates a sequential activation of individual valve units. An electronic system (not shown) can selectively activate one of the valve units to provide pressurized gas to the outlet associated with the selected valve unit.

FIG. 7B illustrates that the pneumatic controller 500 can use a single pressure source to provide different pressure to different outlets. In this experiment, the pneumatic controller 500 is coupled to a single pressure source providing pressurized gas at 10 psi. The lines 702-706 represent the pressure measured at three outlets of the pneumatic controller 500. The valve unit associated with the line 702 is at a release configuration (i.e., FIG. 3A); the valve unit associated with the line 704 is controlled to provide 5 psi to the outlet; and the valve unit associated with the line 706 is dynamically controlled to vary the pressure over time.

FIG. 7C also illustrates that the pneumatic controller 500 can use a single pressure source to provide different pressure to different outlets. The array of 32 balloons can be inflated for different amount of time, thereby providing different pressure to different balloons. In this example, the blue balloons were pressurized for 3 seconds; the yellow balloons were pressurized for 0 second; the green balloons were pressurized for 1 second; and the red balloons were pressurized for 0.5 second. This illustrates that the pneumatic controller can provide different pressure to different outlets in an independent manner.

In some embodiments, integrated channels in the elastomeric manifold have a width and a height substantially greater than 30 µm. For example, the width and height of the integrated channels can be greater than 50 µm, 100 µm, 200 µm, 300 µm, 500 µm, or 700 µm. In some embodiments, the piezoelectric actuator can be custom-designed to provide additional vertical displacements, in which case the integrated channels can be even thicker than 800 µm. A large cross-sectional area of integrated channels is desirable because the cross-sectional area of the integrated channels can determine a flow resistance of the integrated channels, which in turn can affect the rate at which the soft robot actuators can be pressurized. For example, if the cross-sectional area of the integrated channels is small, then the flow rate of pressurized gas would be small. Therefore, it would take a long time to pressurize a soft robotic actuator. In contrast, if the cross-sectional area of the integrated channels is large, then the flow rate of pressurized gas would be large. Therefore, it would take a short amount of time to pressurize a soft robotic actuator.

In some cases, to meet certain performance specifications, a pneumatic controller may be required to have integrated channels with extremely large cross-sectional areas, and in some cases, the integrated channels may be too thick for piezoelectric actuators to block effectively. For example, if the height of an integrated channel is greater than the maximum vertical displacement of a piezoelectric actuator, then the integrated channel cannot be blocked effectively using the piezoelectric actuator.

In some embodiments, a pneumatic controller can include a master/slave manifold that can effectively block thick integrated channels. The master/slave manifold can include a first elastomeric manifold, which can operate as a master manifold. The master/slave manifold can also include an additional elastomeric manifold, called a slave manifold, placed on top of the master manifold. The outlets of the master manifold are coupled to the inputs of the slave manifold.

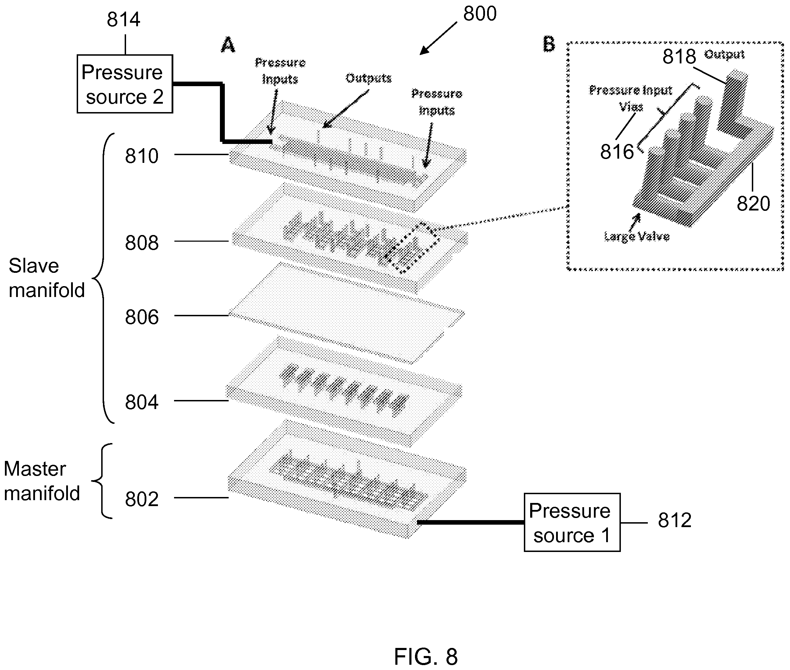

FIGS. 8A-8B illustrate a multi-stage elastomeric manifold having a master/slave manifold in accordance with certain embodiments. The multi-stage elastomeric manifold 800 can include a master manifold 802 and a slave manifold including a pressure chamber layer 804, a membrane 806, a valve layer 808, and a channel layer 810. The master manifold 802 can include integrated channels that are coupled to a pressure source 812 and the pressure chamber layer 804; the pressure chamber layer 804 is configured to provide pressure from the pressure source 812 to the membrane 806, which in turn is used to block large valves in the valve layer 808. The channel layer 810 is coupled to a pressure source 814. The channel layer 810 is also coupled to the valve layer 808 to route pressurized gas from the pressure source 814 to the outlet, towards soft robotic actuators (not shown.) The channels in the channel layer 810 can have larger cross-sectional area compared to the channels in the master manifold 802.

FIG. 8B illustrates a valve in the valve layer 808 in accordance with certain embodiments. The valve layer 808 can include one or more pressure input vias 816 that are coupled to one or more pressure sources 814. The valve layer 808 can couple one of the pressure input vias 816 to the output 818 using an output channel 820 so that the pressurized gas from the pressure source 814 can be provided to the output 818. In some cases, the one or more pressure input vias 816 can be coupled to the same pressure source; in other cases, the one or more pressure input vias 816 can be coupled to different pressure sources. If one or more pressure input vias 816 are coupled to different pressure sources, the valve layer 808 can be configured to couple only one pressure input via to the output 818 at a time. In some embodiments, one of the pressure input vias can be coupled to an exhaust, configured to release pressurized gas in the output channel 820.

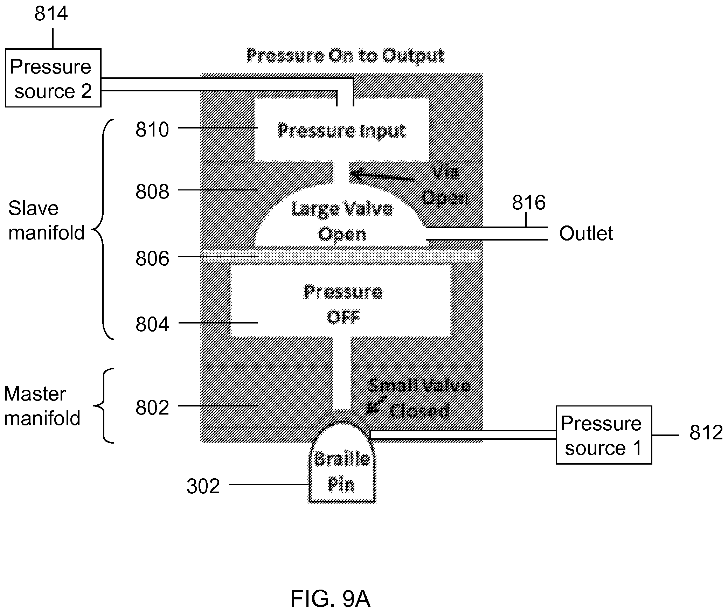

FIGS. 9A-9B illustrate an operation of the multi-stage elastomeric manifold 800 in accordance with certain embodiments. FIGS. 9A-9B show a cross-sectional view of how a single piezoelectric actuator can open or close a valve between a pressure source 814 and an outlet 816. FIG. 9A shows a configuration in which the second pressure source 814 is coupled to the outlet through the channel layer 810 and the valve layer 808. In this configuration, the piezoelectric actuator is actuated, thereby blocking the first pressure source 812 from providing pressurized gas to the pressure chamber layer 804. Therefore, the membrane 806 stays clear of the open via between the chamber layer 810 and the valve layer 808. Pressure source 2 is then able to push the pressurized gas through the pressure input via 816, thereby providing the pressurized gas to the output 818.

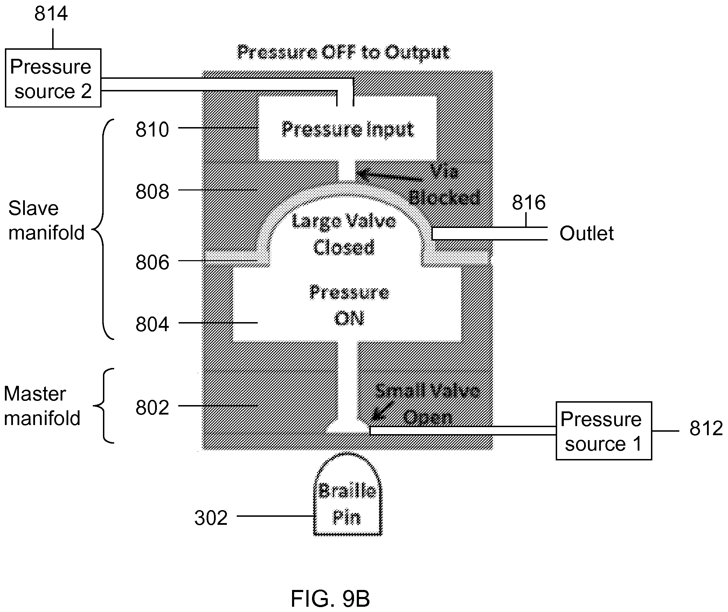

In FIG. 9B, the piezoelectric actuator is turned off. Therefore, the first pressure source 812 can be coupled to the chamber layer 804 and provide pressurized gas to the chamber layer 804. When the chamber layer 804 is pressurized, the pressure deflects the membrane 806, blocking the via between the valve layer 808 and the channel layer 810, thereby decoupling the channel layer 810 from the outlet 816. This breaks the coupling between the second pressure source 814 and the outlet. Therefore, the piezoelectric actuator and the master/slave manifold can effectively pass or block pressurized gas from the second pressure source 814 to the outlet.

The pneumatic controller with the master/slave manifold is especially useful when the channels in the channel layer 810 are tall. In some embodiments, the channels in the channel layer 810 can be taller than the maximum vertical displacement of piezoelectric actuators. For example, the channels in the channel layer 810 can be taller than 100 µm, 300 µm, 500 µm, 700 µm, 1000 µm, or 1200 µm. This way, the flow resistance of the slave manifold can be significantly less than the flow resistance of the master manifold. For example, the flow resistance of the slave manifold can be four times less than the flow resistance of the master manifold. The desired channel height can be based on the desired flow rate and pressure required for the soft robotic actuator. Taller channels provide larger flow rates but typically will not hold as high a pressure. In many embodiments, channels having a height of 100 µm, 300 µm, or 500 µm can provide desired flow rate and pressure characteristics. In some embodiments, the channel directly above the piezoelectric actuators can be formed as semi-ellipses with a width of 0.5 mm and a height of 0.1 mm.

In some embodiments, for proper operation of the master/slave manifold, the gas pressure from the first pressure source 812 can be greater than the gas pressure from the second pressure source 814. In some cases, the gas pressure from the first pressure source 812 can be at least 5 psi greater than the gas pressure from the second pressure source 814.

In some embodiments, the master manifold 802 can be formed using a thick slab of PDMS. The slab of PDMS can be formed by mixing PDMS and a soft silicone material (e.g., Ecoflex) at an about 10:1 mixing ratio, pouring the mixture directly on a mold, and baking the mixture at 60° C for at least 4 hours. The slab of PDMS can be molded using a three-dimensional printer, such as Objet Connex500.

The slab of PDMS can include embedded channels that are bonded to a thin membrane of PDMS. The thin PDMS membrane can be fabricated using spin-coating on a silanized (Tridecafluoro-1,2,2-Tetrahydrooctyl-1-Trichlorosilane) glass slide and baked at 80° C for at least 1 hour. Because the slab of PDMS includes a mixture of PDMS and the soft silicone material, the slab of PDMS and the PDMS membrane can be bonded together by plasma oxidation using a plasma etcher (SPI PPII, West Chester, PA) for 30 seconds at 0.3 Torr.

In some embodiments, the slave manifold can include three thick layers of PDMS with embedded channels 804, 808, 810 and one membrane layer 806. A 3D printer (Objet Connex500) was used to mold the thick layers. All layers were bonded together and then to the top of the PDMS master manifold using plasma oxidation.

In some embodiments, the membrane layer 806 can be fabricated as a mixture of PDMS and the soft silicone material (e.g., Ecoflex). In some cases, approximately 1:2 mixing ratio of PDMS and the soft silicone material can provide properties with relatively larger strain than pure PDMS membranes and also allows bonding to be performed by oxygen plasma (the soft silicone material alone would not plasma bond to PDMS). In some embodiments, the membrane layer 806 can be fabricated via spin coating on a silanized (Tridecafluoro-1,2,2-Tetrahydrooctyl-1-Trichlorosilane) glass slide. In some cases, the membrane layer 806 can be spun at 1500 revolutions per minute (rpm) for 60 seconds using a spin coater. The spin-coated material can be subsequently baked at 80° C for about an hour to form the membrane 806.

In the channel layer 810, through-holes can be bored using a 0.75mm diameter dermal biopsy punch (Harris Uni-Core, Hatfield, PA). Subsequently, the channel layer 810 can be coupled to external devices via 18 gauge blunt needles using tubing (Tygon.)

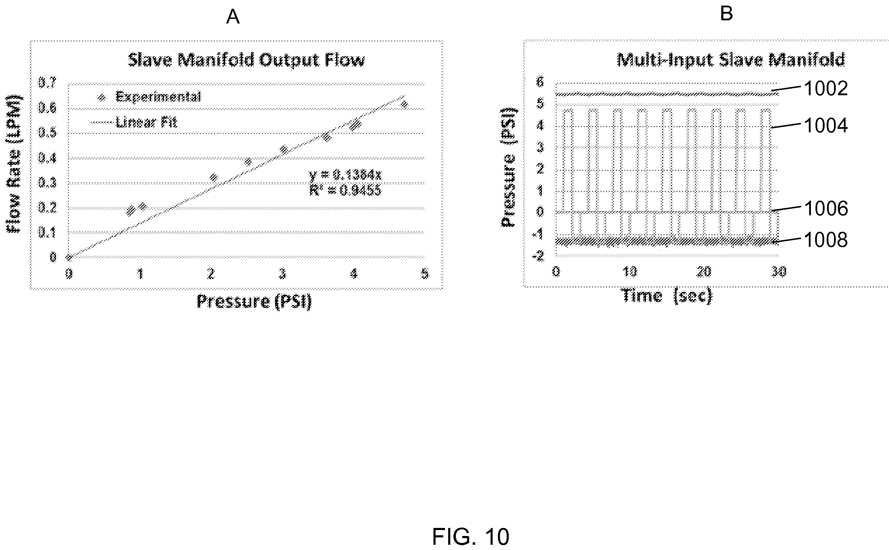

FIG. 10A shows the relationship between a pneumatic pressure applied by a pressure source and a pneumatic flow rate through the slave manifold in accordance with certain embodiments. The slope of the fitted linear regression line can represent the inverse of the pneumatic controller's resistance. In some embodiments, the resistance of the slave manifold is 7 psi / liter per minute (LPM), which is about 4 times less than the resistance of the elastomeric manifold in FIG. 6A.

FIG. 10B illustrates that the operation of the master/slave manifold in accordance with certain embodiments. The line 1002 illustrates the input pressure, and lines 1004-1008 illustrate different pressure levels at different outlets. For example, the line 1002 illustrates the pressure level of an outlet that oscillates between three different pressure sources; the line 1004 illustrates the pressure level of an outlet coupled to an atmospheric pressure source; and the line 1006 illustrates the pressure level of an outlet coupled to vacuum. FIG. 10B illustrates that the master/slave manifold can be controlled to provide different pressure to different outlets.

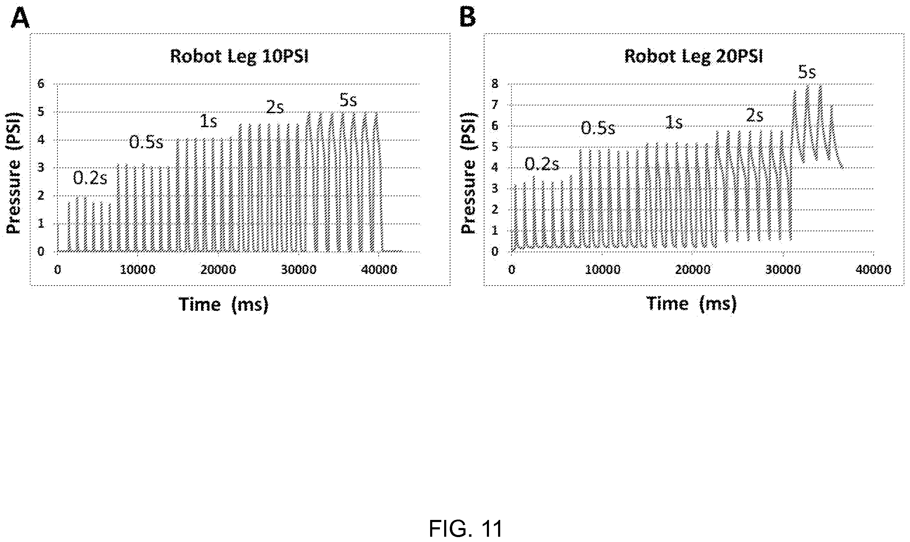

FIGS. 11A-11B show pressure profiles for controlling a soft tentacle using various actuation sequences in accordance with certain embodiments. FIG. 11A illustrates the case in which the pressure of the pressurized gas is 10 psi; FIG. 11B illustrates the case in which the pressure of the pressurized gas is 20 psi. FIGS. 11A-11B illustrates that the master/slave manifold is capable of controlling a soft robotic actuator using various pressure sequences.

In some embodiments, the pneumatic controller can be controlled using software running on a computational device. In some cases, the computational device can use a Lab VIEW software to control the pneumatic controller in a flexible and systematic manner. The LabVIEW software can control the valves using a predefined script or in real-time by selecting buttons on the graphical user interface. The Lab VIEW software can systematically control the actuation sequence of the valve units and simultaneously record any data provided by the external pressure/flowrate transducers (Digi-Key Part # 480-1920-ND, Thief River Falls, MN). This Lab VIEW software can enable a rapid modification of code to address the needs of a particular pneumatic controller design. The software is organized into three hierarchical levels. The top level can provide the user interface, providing control options that correspond to the functionality of the elastomeric manifold. The elastomeric manifold can be designed with different configuration of integrated channels for different functionalities. For example, the elastomeric manifold can have different number of outputs, inputs, and different multiplexing schemes. The top level of the software can be programmed to directly provide control over these parameters with simpler command buttons (i.e. turn left) for the user. The intermediate level includes instructions that can convert the user input into a time-sequence of binary on and off states for each of the 64 pins. Finally, the lowest level of code cooperates with drivers that can control the actuation of the piezoelectric actuators.

In other embodiments, the software needed for implementing the control process includes a high level procedural or an object-orientated language such as MATLAB^{®}, C, C++, C#, Java, or Perl. The software may also be implemented in assembly language if desired. In certain embodiments, the software is stored on a storage medium or device such as read-only memory (ROM), programmable-read-only memory (PROM), electrically erasable programmable-read-only memory (EEPROM), flash memory, or a magnetic disk that is readable by a general or special purpose-processing unit to perform the processes described in this document. The processors can include any microprocessor (single or multiple core), system on chip (SoC), microcontroller, digital signal processor (DSP), graphics processing unit (GPU), or any other integrated circuit capable of processing instructions such as an x86 microprocessor.

Although the present disclosure has been described and illustrated in the foregoing example embodiments, it is understood that the present disclosure has been made only by way of example, and that numerous changes in the details of implementation of the disclosure may be made without departing from the spirit and scope of the disclosure, which is limited only by the claims which follow. By non-limiting way of example only, the actuator array may employ any actuator and is not limited to piezoelectric actuators generally, or Braille pins, specifically. Other embodiments are within the following claims.

## Claims

1. A pneumatic controller (200) for controllably providing a pressurized fluid to a target location, the pneumatic controller (200) comprising:
an elastomeric manifold (206) comprising a body (218) and a membrane (216) coupled to a portion of the body (218), wherein a first volume between the body (218) and the membrane (216) forms at least a first integrated channel (210) having a first inlet, a first outlet, and a first exhaust, wherein the first integrated channel (210) is configured to receive a pressurized fluid at a first pressure at the first inlet and provide the pressurized fluid to the first outlet; and
a valve unit comprising a first actuator (302a) and a second actuator (302b), wherein the first actuator (302a) is configured to deflect a first portion of the membrane (216) to control a fluidic flow between the first inlet and the first outlet of the first integrated channel (210), and wherein the second actuator (302b) is configured to deflect a second portion of the membrane (216) to control a fluidic flow between the first outlet and the first exhaust in the first integrated channel (210).

2. The pneumatic controller (200) of claim 1, wherein at least one of the first actuator (302a) and the second actuator (302b) comprises a piezoelectric actuator.

3. The pneumatic controller (200) of any preceding claim, wherein at least one of the first actuator (302a) and the second actuator (302b) comprises one or more of: shape-memory alloys, dielectric elastomers, and a pneumatic/hydraulic pressure actuator.

4. The pneumatic controller (200) of any preceding claim, wherein the body (218) comprises a first material and the membrane (216) comprises a second material, and wherein the second material is at least as elastic as the first material.

5. The pneumatic controller (200) of any preceding claim, wherein a second volume between the body (218) and the membrane (216) form a second integrated channel (210) having a second inlet, a second outlet, and a second exhaust, and wherein the pneumatic controller (200) further comprises a second valve unit configured to deflect a third portion of the membrane (216) to control a fluidic flow between the second inlet, the second outlet, and the second exhaust.

6. The pneumatic controller (200) of any preceding claim, wherein the first outlet is coupled to a pressurizable chamber (306).

7. The pneumatic controller (200) of claim 6, wherein the pressurizable chamber (306) is a component of a soft robotic system.

8. The pneumatic controller (200) of any preceding claim, wherein the first pressure of the pressurized fluid is at least 5 psi.

9. The pneumatic controller (200) of any preceding claim, wherein a height of the first integrated channel (210) is at least 100 µm.

10. The pneumatic controller (200) of any preceding claim, wherein the second material comprises a mixture of a soft silicone material and Polydimethylsiloxane (PDMS.)

11. The pneumatic controller (200) of any preceding claim, wherein the membrane (216) comprises a material having a maximum tolerable strain greater than 150%.

12. A method of actuating a pressurizable chamber, the method comprising:
receiving a pressurized fluid from the inlet in the integrated channel (210) of the elastomeric manifold (206) of the pneumatic controller (200) as described in any one of claims 1-11;
moving the second actuator (302b) of the pneumatic controller (200) from a first position to a second position to deflect a first portion of the first membrane (216), thereby blocking a fluidic flow between the outlet and the exhaust of the first integrated channel (210) and to route the pressurized fluid through the first outlet to the pressurizable chamber (306) coupled to the first outlet; and
once a pressure in the pressurizable chamber reaches a predetermined level, moving the first actuator (302a) from a third position to a fourth position to deflect a second portion of the first membrane (216), thereby blocking a fluidic flow between the inlet and the outlet of the first integrated channel (210) and to maintain the pressure in the pressurizable chamber (306).

13. The method of claim 12, further comprising moving the second actuator (302b) from the second position to the first position to allow a fluidic flow from the pressurizable chamber to the exhaust.

14. The method of one of claims 12-13, wherein receiving the pressurized fluid from the pressure source comprises receiving pressurized fluid having pressure of at least 5 psi from the pressure source.

15. The method of one of claims 12-14, further comprising receiving, from a computational device at the pneumatic controller (200), an instruction to move one or more of the first actuator (302a) and the second actuator (302b); optionally wherein receiving the instruction comprises receiving the instruction over a wireless communication system.

## Patentansprüche

1. Pneumatisches Steuergerät (200) zur steuerbaren Lieferung eines unter Druck stehenden Fluids an eine Zielposition, wobei das pneumatische Steuergerät (200) Folgendes aufweist:
einen elastomeren Verteiler (206), der einen Körper (218) und eine an einen Abschnitt des Körpers (218) gekoppelte Membran (216) aufweist, wobei ein erstes Volumen zwischen dem Körper (218) und der Membran (216) mindestens einen ersten integrierten Kanal (210) mit einem ersten Eingang, einem ersten Ausgang und einem ersten Auslass bildet, wobei der erste integrierte Kanal (210) gestaltet ist, um ein unter Druck stehendes Fluid mit einem ersten Druck am ersten Eingang aufzunehmen und das unter Druck stehende Fluid zum ersten Ausgang zu liefern, und
eine Ventileinheit, die ein erstes Stellglied (302a) und ein zweites Stellglied (302b) aufweist, wobei das erste Stellglied (302a) gestaltet ist, um einen ersten Abschnitt der Membran (216) abzulenken, um eine fluidische Strömung zwischen dem ersten Eingang und dem ersten Ausgang des ersten integrierten Kanals (210) zu steuern, und wobei das zweite Stellglied (302b) gestaltet ist, um einen zweiten Abschnitt der Membran (216) abzulenken, um eine fluidische Strömung zwischen dem ersten Ausgang und dem ersten Ablass im ersten integrierten Kanal (210) zu steuern.

2. Pneumatisches Steuergerät (200) nach Anspruch 1, wobei mindestens eines von dem ersten Stellglied (302a) und dem zweiten Stellglied (302b) ein piezoelektrisches Stellglied aufweist.

3. Pneumatisches Steuergerät (200) nach einem der vorhergehenden Ansprüche, wobei mindestens eines von dem ersten Stellglied (302a) und dem zweiten Stellglied (302b) eines oder mehrere von Folgenden aufweist: Formgedächtnislegierungen, dielektrische Elastomere und ein pneumatisches/hydraulisches Druckstellglied.

4. Pneumatisches Steuergerät (200) nach einem der vorhergehenden Ansprüche, wobei der Körper (218) ein erstes Material aufweist und die Membran (216) ein zweites Material aufweist, und wobei das erste Material mindestens so elastisch wie das erste Material ist.

5. Pneumatisches Steuergerät (200) nach einem der vorhergehenden Ansprüche, wobei ein zweites Volumen zwischen dem Körper (218) und der Membran (216) einen zweiten integrierten Kanal (210) mit einem zweiten Eingang, einem zweiten Ausgang und einem zweiten Auslass bildet, und wobei das pneumatische Steuergerät (200) ferner eine zweite Ventileinheit aufweist, die gestaltet ist, um einen dritten Abschnitt der Membran (216) abzulenken, um eine fluidische Strömung zwischen dem zweiten Eingang, dem zweiten Ausgang und dem zweiten Auslass zu steuern.

6. Pneumatisches Steuergerät (200) nach einem der vorhergehenden Ansprüche, wobei der erste Ausgang an eine mit Druck beaufschlagbaren Kammer (306) gekoppelt ist.

7. Pneumatisches Steuergerät (200) nach Anspruch 6, wobei die mit Druck beaufschlagbare Kammer (306) eine Komponente eines Soft-Robotersystems ist.

8. Pneumatisches Steuergerät (200) nach einem der vorhergehenden Ansprüche, wobei der erste Druck des unter Druck stehenden Fluids mindestens 5 psi beträgt.

9. Pneumatisches Steuergerät (200) nach einem der vorhergehenden Ansprüche, wobei eine Höhe des ersten integrierten Kanals (210) mindestens 100 µm beträgt.

10. Pneumatisches Steuergerät (200) nach einem der vorhergehenden Ansprüche, wobei das zweite Material eine Mischung aus einem weichen Silikonmaterial und Polydimethylsiloxan (PDMS) aufweist.

11. Pneumatisches Steuergerät (200) nach einem der vorhergehenden Ansprüche, wobei die Membran (216) ein Material mit einer maximal tolerierbaren Dehnung von mehr als 150% aufweist.

12. Verfahren zur Betätigung einer mit Druck beaufschlagbaren Kammer, wobei das Verfahren Folgendes umfasst:
Aufnahme eines unter Druck stehenden Fluids aus dem Eingang in dem integrierten Kanal (210) des elastomeren Verteilers (206) des pneumatischen Steuergeräts (200) nach einem der Ansprüche 1-11,
Bewegen des zweiten Stellglieds (302b) des pneumatischen Steuergeräts (200) von einer ersten Position zu einer zweiten Postion, um einen ersten Abschnitt der ersten Membran (216) abzulenken und dadurch eine fluidische Strömung zwischen dem Ausgang und dem Auslass des ersten integrierten Kanal (210) zu blockieren und um das unter Druck stehende Fluid durch den ersten Ausgang zur mit Druck beaufschlagbaren, mit dem ersten Ausgang gekoppelten Kammer (306) zu leiten, und
sobald ein Druck in der mit Druck beaufschlagbaren Kammer ein vorbestimmtes Niveau erreicht, Bewegen des ersten Stellglieds (302a) von einer dritten Position zu einer vierten Position, um einen zweiten Abschnitt der ersten Membran (216) abzulenken und dadurch eine fluidische Strömung zwischen dem Eingang und dem Ausgang des ersten integrierten Kanals (210) zu blockieren und um den Druck in der mit Druck beaufschlagbaren Kammer (306) zu halten.

13. Verfahren nach Anspruch 12, ferner umfassend das Bewegen des zweiten Stellglieds (302b) von der zweiten Position zur ersten Position, um einer fluidischen Strömung zu ermöglichen, von der mit Druck beaufschlagbaren Kammer zum Ablass zu strömen.

14. Verfahren nach einem der Ansprüche 12-13, wobei das Aufnehmen des unter Druck stehenden Fluids aus der Druckquelle das Aufnehmen von unter Druck stehendem Fluid mit einem Druck von mindestens 5 psi aus der Druckquelle umfasst.

15. Verfahren nach einem der Ansprüche 12-14, ferner umfassend das Empfangen, von einer Recheneinrichtung am pneumatischen Steuergerät (200), einer Anweisung zum Bewegen von eines oder mehreren des ersten Stellglieds (302a) und des zweiten Stellglieds (302b), optional wobei das Empfangen des Anweisung das Empfangen der Anweisung über ein drahtloses Kommunikationssystem umfasst.

## Revendications

1. Contrôleur pneumatique (200) pour fournir de manière contrôlable un fluide pressurisé à un emplacement cible, le contrôleur pneumatique (200) comprenant :
un collecteur élastomère (206) comprenant un corps (218) et une membrane (216) couplée à une partie du corps (218), un premier volume entre le corps (218) et la membrane (216) formant au moins un premier conduit intégré (210) ayant une première entrée, une première sortie, et un premier échappement, le premier conduit intégré (210) étant configuré pour recevoir un fluide pressurisé à une première pression à la première entrée et fournir le fluide sous pression à la première sortie ; et
un ensemble de clapets comprenant un premier actionneur (302a) et un deuxième actionneur (302b), le premier actionneur (302a) étant configuré pour faire fléchir une première partie de la membrane (216) pour réguler un écoulement fluidique entre la première entrée et la première sortie du premier conduit intégré (210), et le deuxième actionneur (302b) étant configuré pour faire fléchir une deuxième partie de la membrane (216) pour réguler un écoulement fluidique entre la première sortie et le premier échappement dans le premier conduit intégré (210).

2. Contrôleur pneumatique (200) selon la revendication 1, dans lequel au moins l'un du premier actionneur (302a) et du deuxième actionneur (302b) comprend un actionneur piézoélectrique.

3. Contrôleur pneumatique (200) selon l'une quelconque des revendications précédentes, dans lequel au moins l'un du premier actionneur (302a) et du deuxième actionneur (302b) comprend un ou plusieurs de : alliages à mémoire de forme, élastomères diélectriques, et un actionneur à pression pneumatique/hydraulique.

4. Contrôleur pneumatique (200) selon l'une quelconque des revendications précédentes, dans lequel le corps (218) comprend un premier matériau et la membrane (216) comprend un deuxième matériau, et dans lequel le deuxième matériau est au moins aussi élastique que le premier matériau.

5. Contrôleur pneumatique (200) selon l'une quelconque des revendications précédentes, dans lequel un deuxième volume entre le corps (218) et la membrane (216) forme un deuxième conduit intégré (210) ayant une deuxième entrée, une deuxième sortie et un deuxième échappement, le contrôleur pneumatique (200) comportant en outre un deuxième ensemble de clapets configuré pour faire fléchir une troisième partie de la membrane (216) pour réguler un écoulement fluidique entre la deuxième entrée, la deuxième sortie et le deuxième échappement.

6. Contrôleur pneumatique (200) selon l'une quelconque des revendications précédentes, dans lequel la première sortie est couplée à une chambre pressurisable (306).

7. Contrôleur pneumatique (200) selon la revendication 6, dans lequel la chambre pressurisable (306) est un composant d'un système robotique souple.

8. Contrôleur pneumatique (200) selon l'une quelconque des revendications précédentes, dans lequel la première pression du fluide pressurisé est d'au moins 5 psi.

9. Contrôleur pneumatique (200) selon l'une quelconque des revendications précédentes, dans lequel une hauteur du premier conduit intégré (210) est d'au moins 100 µm.

10. Contrôleur pneumatique (200) selon l'une quelconque des revendications précédentes, dans lequel le deuxième matériau comprend un mélange d'un matériau siliconé souple et de polydiméthylsiloxane (PDMS.)

11. Contrôleur pneumatique (200) selon l'une quelconque des revendications précédentes, dans lequel la membrane (216) comprend un matériau ayant une déformation tolérable maximale supérieure à 150 %.

12. Procédé d'actionnement d'une chambre pressurisable, le procédé comprenant :
la réception d'un fluide pressurisé de l'entrée dans le conduit intégré (210) du collecteur élastomère (206) du contrôleur pneumatique (200) tel qu'il est décrit dans l'une quelconque des revendications 1-11 ;
le déplacement du deuxième actionneur (302b) du contrôleur pneumatique (200) d'une première position à une deuxième position pour faire fléchir une première partie de la première membrane (216), en interdisant ainsi un écoulement fluidique entre la sortie et l'échappement du premier conduit intégré (210) et pour acheminer le fluide pressurisé par la première sortie vers la chambre pressurisable (306) couplée à la première sortie ; et
une fois qu'une pression dans la chambre pressurisable atteint un niveau prédéterminé, le déplacement du premier actionneur (302a) d'une troisième position à une quatrième position pour faire fléchir une deuxième partie de la première membrane (216), en interdisant ainsi un écoulement fluidique entre l'entrée et la sortie du premier conduit intégré (210) et maintenir la pression dans la chambre pressurisable (306).

13. Procédé selon la revendication 12, comprenant en outre le déplacement du deuxième actionneur (302b) de la deuxième position à la première position pour permettre un écoulement fluidique de la chambre pressurisable à l'échappement.

14. Procédé selon l'une des revendications 12-13, dans lequel la réception du fluide pressurisé de la source de pression comprend la réception du fluide pressurisé ayant une pression d'au moins 5 psi de la source de pression.

15. Procédé selon l'une des revendications 12-14, comprenant en outre la réception, d'un dispositif informatique sur le contrôleur pneumatique (200), d'une instruction pour déplacer l'un ou plusieurs du premier actionneur (302a) et du deuxième actionneur (302b) ; la réception de l'instruction comprenant optionnellement la réception de l'instruction sur un système de communication sans fil.
